# EUROPEAN PATENT SPECIFICATION

(11) **EP 2 934 869 B1**
(45) Date of publication and mention of the grant of the patent: **11.01.2017**
(21) Application number: 13824354.8
(22) Date of filing: 21.11.2013
(51) Int. Cl.: B29D 30/00, B29D 30/06

(54) **A METHOD FOR CONTROLLING THE GEOMETRY OF GREEN TYRES DIFFERENT FROM EACH OTHER AND A PROCESS FOR MANUFACTURING TYRES DIFFERENT FORM EACH OTHER**
VERFAHREN ZURKONTROLLE DER GEOMETRIE UNTERSCHIEDLICHER REIFENROHLINGE UND VERFAHREN ZUR HERSTELLUNG VON EINANDER UNTERSCHIEDLICHER REIFEN
PROCÉDÉ DE CONTRÔLE DE LA GÉOMÉTRIE DE PNEUS CRUS DIFFÉRENTS DE L'AUTRE ET UN PROCÉDÉ DE FABRICATION DES PNEUS DIFFÉRENTS DE L'AUTRE

(30) Priority: 20.12.2012 IT PD20120393; 09.01.2013 US 201361750577 P
(43) Date of publication of application: 28.10.2015
(73) Proprietor: Pirelli Tyre S.p.A., 20126 Milano (IT)
(72) Inventor: MANCINI, Gianni, I-20126 Milano (IT); MARCHINI, Maurizio, I-20126 Milano (IT)
(74) Representative: Susanetto, Carlo
(86) International application number: PCT/IB2013/060301
(87) International publication number: WO 2014/097016

(56) References cited:
- EP-A1- 0 468 344
- EP-A1- 1 749 647
- DE-A1- 19 837 680
- JP-A- 60 196 330
- US-A- 3 932 256

## Description

The present invention relates to a method for controlling the geometry of green tyres different from each other and built up in succession, which method is intended to obtain a regular circular conformation of the beads of those green tyres.

The invention is further directed towards a process for manufacturing tyres different from each other, a pre-moulding device and a tyre production plant.

A tyre generally comprises a carcass structure which is torically formed in a ring-like manner about an axis of rotation of the tyre, including one or more carcass plies which are provided with reinforcement cords which are located in substantially radial planes. Each carcass ply has its individual ends firmly associated with at least one annular metal reinforcement structure which is known as a "bead core".

In a radially outer position with respect to the carcass structure, there is positioned a band of elastomer material which is referred to as the tread band and in which a relief pattern (tread pattern) which is intended for contact with the road surface is formed.

There extend from the opposite axial ends of the tread band, in a substantially radial direction, a pair of sidewalls whose free ends incorporate the respective bead cores, forming at the radially inner ends of the tyre the so-called "beads", whose function is to allow the assembly of the tyre with a corresponding mounting rim of the tyre. The radially inner diameter of the tyre defined by the beads is also referred to as the fitting diameter.

There is interposed between the carcass structure and the tread band a reinforcement structure which is generally known as the belt structure. That structure generally comprises, in the case of tyres for motor cars, at least two radially overlapping strips of rubber-coated fabric provided with reinforcement cords, usually of metal, which are arranged parallel with each other in each strip and crossed with the cords of the adjacent strip, preferably symmetrically with respect to the equatorial plane of the tyre. Preferably, the belt structure further also comprises in a radially outer position, at least at the ends of the underlying belt strips, a third layer of textile or metal cords which are arranged circumferentially (at 0 degrees). Finally, in tyres of the tubeless type there is provided a radially inner layer which is referred to as a liner and which has impermeability characteristics in order to ensure the air-tightness for the tyre itself.

The term "substantially uniform pressure" is intended to be understood to be a pressure variable within a value of 10% with respect to the mean value. For example, in the case of a mean pressure of 5 bar applied to a radially inner surface of the beads, it will be understood that the "pressure applied is substantially uniform" if, in each location of that surface, the pressure applied is between 4.5 and 5.5 bar.

The term "substantially continuous surface" when it refers to a pre-moulding device is intended to be understood to refer to a surface capable of transmitting to an elastomer component of a green tyre, in particular the beads, a substantially uniform pressure, in respect of the terms defined above. In more structural terms, that surface must not have holes or recesses having a surface-area greater than 5% with respect to the total surface-area of the surface, whilst it could also have steps, for example, around those recesses, provided that they are less than 0.5 mm in size.

Finally, it should be set out that the term "radial plane" is intended to define any plane which contains the axis of rotation of the tyre.

During processes for producing tyres, the various components of the tyre are assembled in one or more building lines, from which there is obtained a so-called "green" tyre, that is to say, a tyre obtained by a building process and not yet moulded and vulcanised.

The document WO 2009/040594 in the name of the same Applicant describes a process in which the elastomer material is arranged on the underlying components of the green tyre, for example, on the belt structure, in the form of a continuous strip which is wound in successive coils partially overlapped to one another.

JP 60196330 discloses an expandable drum for building tyres and US 3932256, which could be considered the closest prior art, discloses an expandable tyre building drum on which a carcass is placed for the purpose of applying a tread thereon.

The Applicant notes that, at the end of the building step, each green tyre is unloaded from the building line and transferred to the moulding and vulcanising unit where it is subjected to temperature values and pressure values so as to vulcanise the elastomer material, obtaining the structural stability thereof. To that end, each green tyre is inserted into a suitable vulcanising mould which has dimensions so as to receive in engagement the green tyre at the beads. Each vulcanising mould is specific for each tyre model because it is provided for a fitting diameter and counter-shaped in such a manner as to form at the outer surface of the tread band the desired tread pattern and, on the outer surface of the sidewalls, writing and references for identifying the tyre.

Before being inserted into the vulcanising mould, there may be provided a regularising station in which the green tyre is subjected to a cold moulding operation of the beads. In particular, the Applicant notes that this operation is carried out by means of a suitable pre-moulding device with radial expansion which provides for regularisation of the circular conformation of the beads, so as to avoid undesirable occurrences of interference between beads and the vulcanisation mould, allowing subsequent easy insertion of the green tyre therein.

The Applicant firstly considers that, in order not to involve potential increases in the production times of a tyre, each vulcanisation mould would have to be provided with a dedicated pre-moulding device for the beads.

The Applicant has therefore observed that the plants for tyre production which comprise a plurality of vulcanisation moulds would require a high number of pre-moulding devices, with consequent negative repercussions on the production costs as well as on the control of the production operations, including those connected with the storage of the pre-moulding devices, their maintenance and their replacement in the event of production changes relating to the type of tyres.

The Applicant has secondly noted that, in the processes for building a green tyre which provide for the formation of the elastomer component of the beads by winding a continuous strip of elastomer material in coils, a dimensional difference of the beads with respect to the theoretical circular conformation thereof calculated during the design stage, can occur.

For this purpose, the Applicant has verified that this difference may be attributed to the inaccurate arrangement of the continuous strips of elastomer material in the region of the beads which can give rise to undesirable intermediate spaces between contiguous strips and/or possible overlaps of material.

Finally, the Applicant has noted how possible deformations of the green tyre, such as occurrences of ovalisation thereof, which may become evident during transport and/or the waiting time in respect of the green tyre from the building step to the moulding and vulcanisation step, cause the presence of defects in the finished (vulcanised) tyre, such as, for example, a slipping of one or more carcass plies or the presence of undesirable excess volumes and/or shortages.

The Applicant has therefore perceived that, in order to improve the performance levels of the production cycle of the tyre, in particular in terms of managing costs and operational flexibility, it was necessary to optimise the regularisation step of the formation of the beads of the built green tyre.

Finally, the Applicant has found that, by carrying out that operation by means of a pre-moulding device capable of maintaining a substantial continuity of surfaces with different degrees of radial expansion, it is possible to confer the correct circular conformation on beads of green tyres having different fitting diameters, it thereby being possible to use a single device for different fittings.

In particular, in a first aspect thereof, the invention relates to a method for controlling the geometry of green tyres which are different from each other according to claim 1.

In a second aspect thereof, the invention further relates to a process for manufacturing tyres which are different from each other according to claim 4.

The Applicant believes that, in this manner, besides the fact that it is economically more advantageous, the production cycle of the tyres is made particularly flexible, thereby making it suitable for managing production plants which are requested of frequent production changes of tyre models. In fact, in this manner, the regularisation operation of the circular conformation of the beads is made substantially independent of the specific internal diameter of the green tyre being processed, by using a single pre-moulding device on tyre models having a different internal diameter.

In a third aspect thereof, the present invention relates to a tyre production plant according to claim 12.

The Applicant believes that, as a result of the technical features set out above, that tyre production plant has a pre-moulding device which is capable of efficiently abutting the beads of green tyres having different internal diameters in order to apply thereto a substantially uniform pressure, conferring the desired circular conformation thereon. In fact, the Applicant has observed that the surface continuity of the outer surface of the pre-moulding device is substantially maintained even when the profiled sectors are radially expanded owing to the sliding action in the circumferential direction of the profiled sectors of the respective mutually opposing portions.

The present invention, in at least one of the above-mentioned aspects, may have at least one of the preferred features set out below.

Preferably, each green tyre obtained from the building line may differ from the next one to an extent of up to 40% in terms of the fitting diameter.

Preferably, said circular conformation of said pair of beads is regularised during the unloading of said green tyre from said building line.

In this manner, the two operations for unloading the green tyre from the building line and for regularising the circular conformation of the beads thereof are actually unified, with an obvious saving in terms of time and also dimensions at the plant level, particularly in the moulding and vulcanising zone of the green tyre. Furthermore, it is not necessary to use unloading devices which may cause the beads to become "polygonised", thereby producing additional differences in the conformation of the beads with respect to the theoretical circular conformation.

Preferably, said beads comprise a portion of elastomer material which is obtained by winding a continuous strip of said elastomer material in partially overlapping coils.

In this manner, the regularisation of the conformation of the beads also involves a compression of the partially overlapping strips, which tends to eliminate any air spaces left between them. The Applicant has advantageously recognised that those coils, once in a state compressed one on the other, do not tend to become separated again, making this type of deformation substantially definitive.

As a result of this feature, it is also possible to carry out the regularisation of the circular conformation of the beads at a time not immediately before the insertion of the green tyre in the mould, allowing it to be placed in a temporary storage warehouse before being vulcanised.

In a preferred embodiment of the invention, the circular conformation of said beads is regularised by means of a pre-moulding device capable of abutting green tyre beads having any fitting diameter between a minimum diameter and a maximum diameter greater than said minimum diameter by at least 3%, over the entire radially inner annular extent of said beads.

Preferably, said maximum diameter is greater than said minimum diameter by a fraction of up to 40%.

In this manner, it is possible to regularise the circular conformation of beads of green tyres having any internal diameter between the minimum and maximum values, obtaining a greater flexibility in terms of production.

Preferably, said maximum diameter is greater than said minimum diameter by a fraction between 20% and 40%.

That feature allows a greater range of diameters to be covered, consequently increasing the overall flexibility of the production process.

Preferably, said minimum diameter is about 457 mm (18 inches).

Preferably, said maximum diameter is about 610 mm (24 inches).

Preferably, said pre-moulding device is mounted on a robotic arm.

Preferably, said green tyre is unloaded from said building line by means of said pre-moulding device.

In this manner, a single device carries out both the operation for unloading the green tyre and the operation for regularising the circular conformation of the beads, thereby saving a device.

Preferably, said pre-moulding device abuts said beads over the entire radially inner annular extent thereof at a
pressure of at least 5 bar.

In this manner, an adequate pressure for regularising the circular conformation of the beads is ensured for each degree of radial expansion of the pre-moulding device.

In a preferred embodiment, said pre-moulding device abuts said beads over the entire radially inner annular extent thereof for a time of at least 30 seconds.

In a greatly preferred manner, said pre-moulding device abuts said beads over the entire radially inner annular extent thereof for a time between 40 and 60 seconds.

In this manner, the pressure is applied to the beads for a sufficient time until the circular conformation imparted becomes substantially permanent.

Preferably, said pre-moulding device abuts said beads over the entire radially inner annular extent thereof for a time less than a predefined cycle time of said building line.

In this manner, the operation for regularising the circular conformation of the beads may be regarded similarly to any workstation of the building line so that it does not involve increases in total production times.

Preferably, said green tyre is transferred from said pre-moulding device to a temporary storage warehouse before being vulcanised.

In this manner, the line for building the green tyre and the unit for moulding and vulcanising are made relatively independent so that the processing times thereof may be non-constantly synchronised without causing delays in production.

Preferably, in said building line, at least a portion of said beads of elastomer material is obtained by winding a continuous strip of said elastomer material in partially overlapping coils.

Preferably, each of said profiled sectors at least partially overlaps at least one adjacent profiled sector at a respective foil plate arranged circumferentially around a centre axis of said pre-moulding device.

In this manner, the surface continuity of the outer surface of the pre-moulding device during changes in the radial dimension thereof is ensured by the relative sliding action in a circumferential direction of the overlapping foil plates belonging to adjacent profiled sectors.

In a preferred manner, said foil plate has a thickness less than 0.5 mm.

In a greatly preferred manner, said foil plate has a thickness between 0.2 and 0.4 mm.

In this manner, it is ensured that, even taking into consideration the characteristics of deformability of the elastomer material which forms the external portion of the beads, the pressure applied by the profiled sectors is uniformly distributed over the entire radially inner surface of the beads, including at the passage between a foil plate of a profiled sector and the foil plate of the adjacent profiled sector.

Preferably, said foil plate is supported by at least one bracket extending in a substantially circumferential direction and facing said central body.

In this manner, the foil plate is adequately supported over the entire longitudinal extent thereof so as not to involve undesirable deformations owing to the pressure applied to the beads. This further allows it to be possible to size the foil plates so as to have a relatively small thickness.

Preferably, said foil plate is circumferentially developed over an extent between 200 and 400 mm.

In this manner, there is obtained between adjacent foil plates an adequate degree of overlap which allows the surface continuity to be maintained between the minimum diameter and the maximum diameter of the pre-moulding device.

In a preferred embodiment, said profiled sectors are driven in radial expansion by an actuator of the hydraulic type.

In a preferred embodiment, said actuator has electrically controlled.

Preferably, said minimum diameter of said outer surface, in said contracted configuration, is between 380 and 420 mm.

In a preferred embodiment, said maximum diameter of said outer surface, in said expanded configuration, is between 600 and 650 mm.

In this manner, the pre-moulding device may be used to regularise the circular conformation of beads of the green tyres having the internal diameters of greater commercial interest.

Preferably, said profiled sectors are regularly distributed around said central body in a number between 20 and 36.

In a preferred embodiment, in said contracted configuration, three foil plates overlapped by adjacent profiled sectors are defined in at least one radial direction.

Preferably, in said expanded configuration, at least two foil plates overlapped by adjacent profiled sectors are defined in a radial direction.

In this manner, the rigidity of the outer surface of the pre-moulding device is further increased in such a manner that it does not become subjected to deformations caused by the pressure applied to the beads.

In a preferred embodiment, said pre-moulding device is mounted on a robotic arm.

Preferably, said pre-moulding device is positioned at a final workstation of said building line and is arranged for the unloading of said green tyre from said building line.

The characteristics and advantages of the invention will be better appreciated from the detailed description of a preferred embodiment thereof, given by way of non-limiting example with reference to the appended drawings in which:

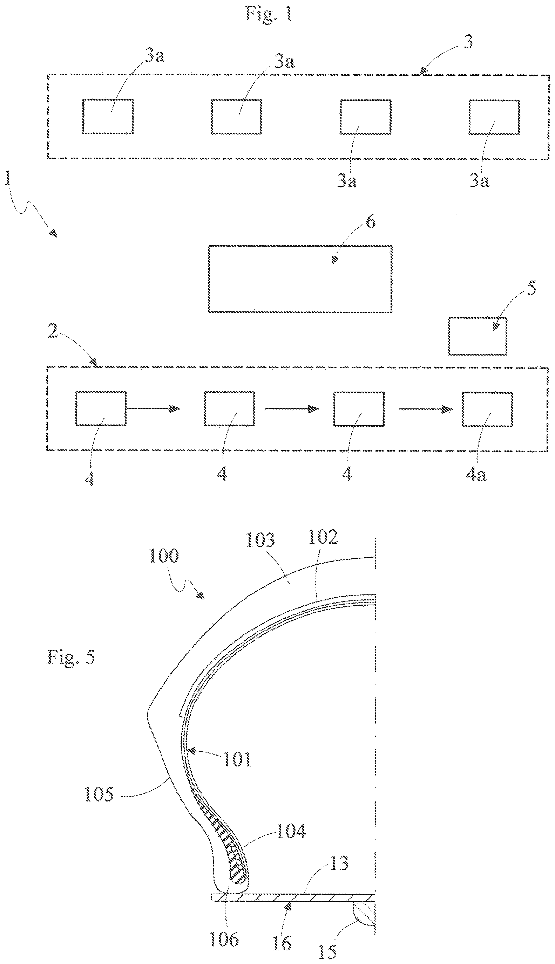

- Figure 1 is a schematic view of a tyre production plant constructed in accordance with the method and process of the invention,
- Figure 2 is a schematic, perspective view of a pre-moulding device constructed in accordance with the invention,
- Figures 3 and 4 are perspective views of a portion of the pre-moulding device of Figure 2 in a contracted and expanded configuration, respectively,
- Figure 5 is a schematic radial cross-section of a green tyre from the pre-moulding device of Figure 2.

In the preferred embodiment described in detail, there is generally designated 1 a tyre production plant constructed in accordance with the method and process of the present invention.

The plant 1 generally comprises a building line 2 for green tyres 100, that is to say, comprising non-vulcanised elastomer material, and a moulding and vulcanisation unit 3 for the green tyres obtained from the building line 2, in turn comprising a plurality of vulcanising moulds 3a.

The building line 2 comprises a plurality of workstations 4 which operate in succession with respect to each other, each of which is arranged to carry out a specific processing operation on a semi-processed product which is moved between one station and another, in accordance with a succession of pre-established processing steps. Each workstation 4 is provided to complete its own processing operation within a predefined processing time, referred to as the cycle time, at the end of which the semi-processed product is moved to the next workstation.

The building line 2 constructs a green tyre 100 substantially comprising at least one carcass ply which is preferably internally coated by a layer of impermeable elastomer material or so-called liner, two so-called "beads" 106 integrating annular anchoring structures which comprise reinforcement bead cores 104, respectively, which may be associated with elastomer fillers and engaged with the circumferential edges of the carcass plies, a belt structure 102 applied in a radially outer position with respect to the carcass plies, a tread band 103 applied in a radially outer position with respect to the belt structure, in a so-called crown region of the tyre and two sidewalls 105 which are applied in laterally opposing positions to the carcass plies, each at a lateral region of the tyre, extending from the corresponding bead to the corresponding lateral edge of the tread band 103.

In the vicinity of a final workstation 4a of the building line 2, the green tyre is unloaded and transferred to the subsequent processing steps, in particular to the moulding and vulcanisation unit 3.

Downstream of the building line 2 and upstream of the moulding and vulcanisation unit 3, there is provided a regularising station 5 which comprises a pre-moulding device 10 which is capable of controlling the geometry of the green tyre 100 being unloaded from the building line 2 and which is in particular intended for regularising the circular conformation of the beads 106.

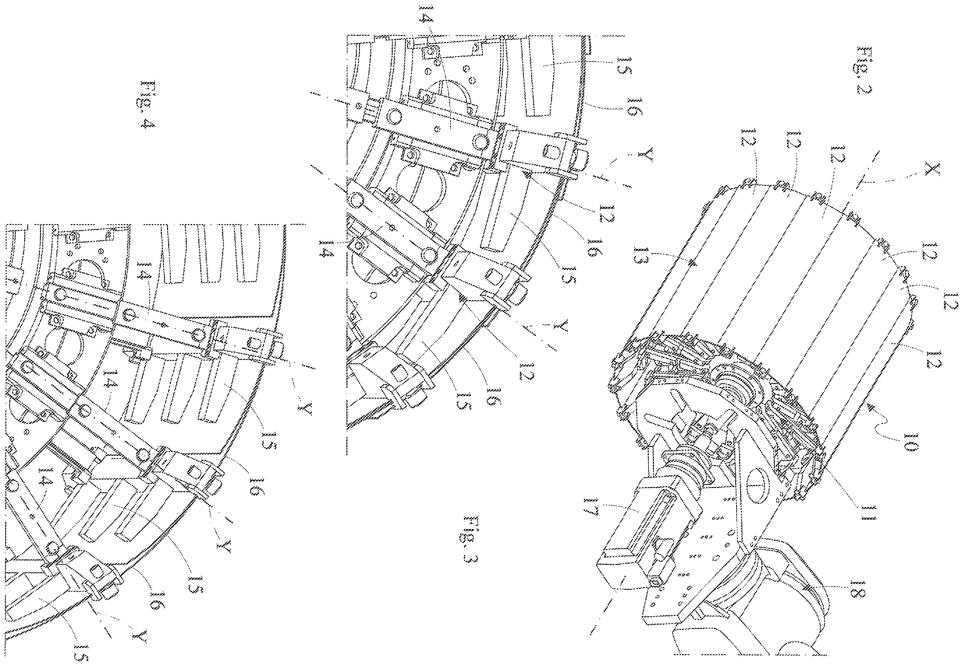

The pre-moulding device 10 comprises a central body 11, through which a centre axis X extends, and a plurality of profiled sectors 12 which are all arranged in succession one beside the other in order to form a substantially cylindrical outer surface 13 having an axis X, and which are connected to the central body 11 with the ability to expand in a radial direction Y defined in the pre-moulding device 10 with reference to the axis X, so as to vary the diameter of the outer surface 13 between a contracted configuration having a minimum diameter (see Figure 3) and an expanded configuration having a maximum diameter (see Figure 4).

In the preferred example described here, the outer surface 13 of the pre-moulding device 10 has, in a contracted configuration, a diameter of approximately 405 mm (minimum diameter) and, in an expanded configuration, a diameter of approximately 625 mm (maximum diameter).

The profiled sectors 12 are substantially identical to each other and are distributed regularly around the central body 11 in a quantity between 20 and 36, preferably 24. Each profiled sector 12 comprises a stem 14 which extends radially from the central body 12 and which is connected thereto at a first radially inner end thereof, a bracket 15 which extends circumferentially from a second radially outer end of the stem 14 and a foil plate 16 which is fixed to the bracket 15 at the side opposite the central body 11.

Each foil plate 16 is arranged in the circumferential direction with a slightly curved formation about the centre axis X so as to form a portion of the cylindrical surface 13.

Preferably, each foil plate 16 is developed circumferentially over an extent between 200 and 400 mm and extends over the entire axial dimension of the external surface 13.

Furthermore, each foil plate 16 is at least partially overlapped with reference to the radial direction Y at least at one foil plate 16 of an adjacent profiled sector 12, in such a manner that the radial expansion movement of the profiled sectors 12 between the contracted configuration and the expanded configuration involves the relative sliding action in the circumferential direction between adjacent foil plates 16.

In order to limit the height of the drop between one foil plate 16 and another at the outer surface 13, each foil plate 16 has a thickness less than 0.5 mm, for example, of approximately 0.3 mm.

The dimensions of the foil plates 16 are such that, when the pre-moulding device 10 is moved into a contracted configuration, three foil plates 16, which belong to adjacent profiled sectors 12 and which overlap each other in the radial direction Y, abut each other in some portions of the outer surface 13 whilst, when the pre-moulding device 10 is moved into an expanded configuration, at least two foil plates 16 which overlap each other abut each other.

The pre-moulding device 10 further comprises an actuator 17 which is associated with the profiled sectors 12 in order to control the radial movement thereof between the contracted configuration and the expanded configuration.

In a preferred embodiment, the actuator 17 is electrically controlled and comprises, for example, a gearmotor to which there are connected the stems 14 of the profiled sectors 12 by means of connecting rods, respectively, and is sized to ensure that the profiled sectors 12 being expanded apply a sufficient pressure to the beads of the green tyre to deform them plastically.

The radial expansion of the pre-moulding device 10 may be obtained in alternative manners, for example, by providing for the stems 14 of the profiled sectors 12 to be mounted on respective helical tracks formed on the central body 11 so that the radial movement of the profiled sectors 12 is obtained at the same time as a circular movement thereof.

The pre-moulding device 10 is preferably mounted on a robotic arm 18 of the regularising station 5, which arm is preferably positioned at the final workstation 4a and is provided for unloading the green tyre from the building line 2.

The pre-moulding device 10 in the contracted configuration is inserted coaxially inside the green tyre 100 being discharged from the final station 4a of the building line 2 and, once it is positioned correctly, the profiled sectors 12 are driven in radial expansion towards the expanded configuration until the outer surface 13 abuts the beads 106 of the green tyre.

At this time, the green tyre 100 is unloaded from the building line 2 and retained in engagement by the pre-moulding device 10. As set out above, the radial expansion of the profiled sectors 12 involves the circumferential sliding of the respective foil plates 16 at the mutual overlapping zone, this allowing maintenance of the substantial continuity of the outer surface 13 which thereby abuts the beads 106 of the green tyre over the entire radially inner, annular extent thereof.

The radial expansion of the profiled sectors 12 is blocked by the resistance offered by the beads 106 which therefore remain subjected to a pressure which tends to compress them in a direction directed radially towards the respective sidewalls 105. It should be noted that the pre-moulding device 10 is capable of abutting beads 106 having any diameter between the minimum diameter and the maximum diameter defined above.

Furthermore, owing to the substantial continuity of the outer surface 13 and the characteristics of deformability of the elastomer material of the beads 106, the pressure applied to the radially inner surface of the beads is substantially uniform.

The pre-moulding device 10 applies the compression action described above for a time of at least 30 seconds, preferably between 40 and 60 seconds, or in any case a time which is sufficiently long for the deformation imparted to the beads 106 also to continue after the disengagement of the pre-moulding device 10, thereby obtaining the regularisation of the circular conformation thereof.

Furthermore, preferably, the time during which the compression action of the beads is applied is less than the cycle time of the building line 2.

The pre-moulding device 10, at the end of the time indicated above, transfers the green tyre to a temporary storage warehouse 6, from which it is subsequently removed in order to be taken to one of the vulcanisation moulds 3a of the moulding and vulcanisation unit 3, which is specific to the fitting diameter of the tyre 100, where it is subjected to vulcanisation. Owing to the regularisation brought about by the pre-moulding device 10, the green tyre 100 is readily inserted inside the mould 3a.

In the event of a change in production of the tyre model, the building line 2 assembles a green tyre 100' having a fitting diameter different from the green tyre 100. Owing to the characteristics set out above, the pre-moulding device 10 is capable of unloading the tyre 100' from the final station 4a of the building line 2 and of regularising the circular conformation of the beads, respectively, with the same methods described above.

## Claims

1. A method for controlling the geometry of green tyres (100, 100') different from each other and built up in succession, comprising:
- transferring each green tyre from a building line (2) to a regularising station (5);
- providing a pre-moulding device (10) by adapting it to the fitting diameter of each green tyre transferred into said regularising station, wherein each green tyre may differ from the next to an extent of at least 3% in terms of the fitting diameter;
- regularising the circular conformation of a pair of beads (106) of said green tyre by pre-moulding it as a function of a respective vulcanisation mould (3a);
- transferring each regularised green tyre to said respective vulcanisation mould (3a).

2. A method according to claim 1, wherein said circular conformation of said pair of beads is regularised during the unloading of said green tyre from said building line (2).

3. A method according to claim 1 or 2, wherein said beads (106) comprise a portion made of elastomer material obtained by winding a continuous strip of said elastomer material in partially overlapping coils.

4. A process for manufacturing tyres different from each other, comprising:
- building in succession, on at least one building line (2), green tyres (100, 100') each of which comprises a pair of beads (106) defining a radially inner end;
- unloading each green tyre (100) from said building line (2);
- regularising the formation of said beads by means of a pre-moulding device (10) adapted to control the geometry of each green tyre, which abuts radially said green tyre at said beads (106) over their entire radially inner annular extent as a function of a respective vulcanisation mould (3a), wherein each green tyre may differ from the next to an extent of at least 3% in terms of fitting diameter;
- transferring said green tyre to said respective vulcanisation mould (3a);
- moulding and vulcanising said green tyre.

5. A process according to claim 4, wherein the circular conformation of said beads (106) is regularised by means of a pre-moulding device (10) adapted to abut green tyre beads having any diameter between a minimum diameter and a maximum diameter greater than said minimum diameter by at least 3%, over the entire radially inner annular extent of said beads.

6. A process according to claim 5, wherein said maximum diameter is greater than said minimum diameter by a fraction between 20% and 40%.

7. A process according to any one of claims 4 to 6, wherein said green tyre is unloaded from said building line (2) by means of said pre-moulding device.

8. A process according to any one of claims 4 to 7, wherein said pre-moulding device (10) abuts said beads (106) over the entire radially inner annular extent thereof at a pressure of at least 5 bar.

9. A process according to any one of claims 4 to 8, wherein said pre-moulding device (10) abuts said beads (106) over the entire radially inner annular extent thereof for a time of at least 30 seconds.

10. A process according to any one of claims 4 to 9, wherein said pre-moulding device abuts said beads over the entire radially inner annular extent thereof for a time less than a predefined cycle time of said building line (2).

11. A process according to any one of claims 4 to 10, wherein said green tyre (100) is transferred from said pre-moulding device (10) to a temporary storage warehouse (6) before being vulcanised.

12. Tyre production plant comprising a green tyre building line (2) and a pre-moulding device (10) adapted to control the geometry of said built-up green tyre, said pre-moulding device being located downstream of said building line (2) and upstream of a moulding and vulcanisation unit (3) for said green tyre, wherein said pre-moulding device comprises a central body (11) and a plurality of profiled sectors (12) arranged in succession side by side to form a substantially cylindrical outer surface (13) of said device and coupled to said central body with the possibility of expansion in a radial direction (Y) defined in said device so as to vary the diameter of said outer surface (13) between a contracted configuration with a minimum diameter and an expanded configuration with a maximum diameter, greater than said minimum diameter by at least 3%, wherein said profiled sectors (12) are capable of abutting said green tyre over the entire radially inner annular extent of its respective beads, wherein each of said profiled sectors at least partially overlaps in said radial direction at least one profiled sector adjacent thereto.

13. Plant according to claim 12, wherein said pre-moulding device (27) is positioned at a final workstation (4a) of said building line (2) and is arranged for the unloading of said green tyre from said building line.

14. Plant according to claim 12 or 13, wherein each of said profiled sectors (12) at least partially overlaps at least one adjacent profiled sector at a respective foil plate (16) arranged circumferentially around a centre axis (X) of said pre-moulding device said foil plate (16) being supported by at least one bracket (15), extending in a substantially circumferential direction and facing said central body (11).

15. Plant according to any of claims 12 to 14, wherein said minimum diameter of said outer surface (13), in said contracted configuration, is between 380 and 420 mm and said maximum diameter of said outer surface (13), in said expanded configuration, is between 600 and 650 mm.

## Patentansprüche

1. Verfahren zur Steuerung von Rohreifen (100, 100'), die sich von einander unterscheiden und der Reihe nach aufgebaut werden, wobei das Verfahren umfasst:
- Überführen jedes Rohreifens von einer Fertigungslinie (2) zu einer Normalisierungsstation (5);
- Bereitstellen einer Vorformungsvorrichtung (10), indem sie an den Passdurchmesser jedes Rohreifens, der in die Normalisierungsstation überführt wird, angepasst wird, wobei jeder Rohreifen sich von dem nächsten in einem Ausmaß von zumindest 3% des Passdurchmessers unterscheiden kann;
- Normalisieren der kreisförmigen Ausformung eines Paars von Wülsten (106) des Rohreifens durch Vorformen in Abhängigkeit von einer jeweiligen Vulkanisierform (3a);
- Überführen jedes normalisierten Rohreifens an die jeweilige Vulkanisierform (3a).

2. Verfahren nach Anspruch 1, wobei die kreisförmige Ausformung des Paars von Wülsten während das Abladens des Rohreifens von der Fertigungslinie (2) erfolgt.

3. Verfahren nach Anspruch 1 oder 2, wobei die Wülste (106) einen Abschnitt aus einem Elastomermaterial umfassen, der durch Wickeln eines durchgehenden Streifens des Elastomermaterials in sich teilweise überlappenden Wicklungen erhalten wird.

4. Verfahren zur Herstellung von Reifen, die sich voneinander unterscheiden, wobei das Verfahren umfasst:
- Fertigen von Rohreifen (100, 100') der Reihe nach an zumindest einer Fertigungslinie (2), wobei jeder Reifen ein Paar von Wülsten (106) umfasst, die ein radial inneres Ende definieren;
- Abladen jedes Rohreifens (100) von der Fertigungslinie (2) ;
- Normalisieren der Ausformung der Wülste mittels einer Vorformungsvorrichtung (10), die dazu geeignet ist, die Geometrie jedes Rohreifens zu steuern, und die an den Wülsten (106) über ihre gesamte radial innere ringförmige Erstreckung in Abhängigkeit von einer jeweiligen Vulkanisierform (3a) radial gegen den Rohreifen anliegt,
wobei jeder Rohreifen sich von dem nächsten in einem Ausmaß von zumindest 3% des Passdurchmessers unterscheiden kann;
- Überführen des Rohreifens an die jeweilige Vulkanisierform (3a);
- Formen und Vulkanisieren des Rohreifens.

5. Verfahren nach Anspruch 4, wobei die kreisförmige Ausformung der Wülste (106) mittels einer Vorformungsvorrichtung (10) normalisiert wird, die dazu geeignet ist, gegen die Rohreifenwülste mit einem beliebigen Durchmesser zwischen einem minimalen Durchmesser und einem maximalen Durchmesser, der um zumindest 3 % größer als der minimale Durchmesser ist, über die gesamte radial innere ringförmige Erstreckung der Wülste anzuliegen.

6. Verfahren nach Anspruch 5, wobei der maximale Durchmesser um einen Bruchteil von zwischen 20% und 40% größer als der minimale Durchmesser ist.

7. Verfahren nach einem der Ansprüche 4 bis 6, wobei der Rohreifen mittels der Vorformungsvorrichtung von der Fertigungslinie (2) abgeladen wird.

8. Verfahren nach einem der Ansprüche 4 bis 7, wobei die Vorformungsvorrichtung (10) bei einem Druck von zumindest 5 bar gegen die Wülste (106) über die gesamte radial innere ringförmige Erstreckung derselben anliegt.

9. Verfahren nach einem der Ansprüche 4 bis 8, wobei die Vorformungsvorrichtung (10) für eine Zeitdauer von zumindest 30 Sekunden gegen die Wülste (106) über die gesamte radial innere ringförmige Erstreckung derselben anliegt.

10. Verfahren nach einem der Ansprüche 4 bis 9, wobei die Vorformungsvorrichtung für eine Zeitdauer, die geringer als eine vordefinierte Zykluszeit der Fertigungslinie (2) ist, gegen die Wülste über die gesamte radial innere ringförmige Erstreckung derselben anliegt.

11. Verfahren nach einem der Ansprüche 4 bis 10, wobei der Rohreifen (100) von der Vorformungsvorrichtung (10) in einen temporären Lagerplatz (6) überführt wird, bevor er vulkanisiert wird.

12. Reifenherstellungsanlage umfassend eine Rohreifen-Fertigungslinie (2) und eine Vorformungsvorrichtung (10), die dazu geeignet ist, die Geometrie der aufgebauten Rohreifens zu steuern, wobei die Vorformungsvorrichtung stromabwärts der Fertigungslinie (2) und stromaufwärts einer Ausformungs- und Vulkanisiereinheit (3) für den Rohreifen angeordnet ist, wobei die Vorformungsvorrichtung einen Zentralkörper (11) und eine Vielzahl von Profilsektoren (12) umfasst, die der Reihe nach Seite an Seite angeordnet sind, um eine im Wesentlichen zylindrische Außenfläche (13) der Vorrichtung zu definieren, und mit dem Zentralkörper mit der Möglichkeit einer Erweiterung in einer radialen Richtung (Y), die in der Vorrichtung definiert ist, gekoppelt sind, um den Durchmesser der Außenfläche (13) zwischen einer eingezogenen Konfiguration mit einem minimalen Durchmesser und einer ausgefahrenen Konfiguration mit einem maximalen Durchmesser, der um zumindest 3% größer ist als der minimale Durchmesser, zu variieren, wobei die Profilsektoren (12) in der Lage sind, gegen den Rohreifen über die gesamte radial innere ringförmige Erstreckung seiner jeweiligen Wülste anzuliegen, wobei jeder der profilierten Sektoren zumindest teilweise zumindest einen dazu benachbarten Profilsektor in der radialen Richtung überlappt.

13. Anlage nach Anspruch 12, wobei die Vorformungsvorrichtung (27) an einer End-Arbeitsstation (4a) der Fertigungslinie (2) positioniert ist und dazu angeordnet ist, um den Rohreifen von der Fertigungslinie abzuladen.

14. Anlage nach Anspruch 12 oder 13, wobei jeder der Profilsektoren (12) zumindest teilweise zumindest einen benachbarten Profilsektor an einer jeweiligen Folienplatte (16) überlappt, die in Umfangsrichtung um eine Zentralachse (X) der Vorformungsvorrichtung herum angeordnet ist, wobei die Folienplatte (16) durch zumindest eine Halterung (15) gestützt wird, die sich im Wesentlichen in einer Umfangsrichtung erstreckt und zu dem Zentralkörper (11) weist.

15. Anlage nach einem der Ansprüche 12 bis 14, wobei der minimale Durchmesser der Außenfläche (13) in der eingezogenen Konfiguration zwischen 380 und 420 mm beträgt, und der maximale Durchmesser der Außenfläche (13) in der ausgefahrenen Konfiguration zwischen 600 und 650 mm beträgt.

## Revendications

1. Procédé de commande de la géométrie de pneus crus (100, 100') différents les uns des autres et construits de manière successive, comprenant le fait :
- de transférer chaque pneu cru d'une ligne de construction (2) à une station de régularisation (5) ;
- de fournir un dispositif de pré-moulage (10) en l'adaptant au diamètre de montage de chaque pneu cru transféré dans ladite station de régularisation, où chaque pneu cru peut différer du pneu suivant à hauteur d'au moins 3% en termes de diamètre de montage ;
- de régulariser la conformation circulaire d'une paire de talons (106) dudit pneu cru par son pré-moulage en fonction d'un moule de vulcanisation respectif (3a) ;
- de transférer chaque pneu cru régularisé audit moule de vulcanisation respectif (3a).

2. Procédé selon la revendication 1, dans lequel ladite conformation circulaire de ladite paire de talons est régularisée au cours du déchargement dudit pneu cru de ladite ligne de construction (2).

3. Procédé selon la revendication 1 ou 2, dans lequel lesdits talons (106) comprennent une partie en matériau élastomère obtenue par enroulement d'une bande continue dudit matériau élastomère en bobines se chevauchant partiellement.

4. Processus de fabrication de pneus différents les uns des autres, comprenant le fait :
- de construire de manière successive, sur au moins une ligne de construction (2), des pneus crus (100, 100') dont chacun comprend une paire de talons (106) définissant une extrémité radialement intérieure ;
- de décharger chaque pneu cru (100) de ladite ligne de construction (2) ;
- de régulariser la formation desdits talons au moyen d'un dispositif de pré-moulage (10) adapté pour commander la géométrie de chaque pneu cru, qui vient en butée radialement contre ledit pneu cru au niveau desdits talons (106) sur toute leur étendue annulaire radialement intérieure en fonction d'un moule de vulcanisation respectif (3a),
dans lequel chaque pneu cru peut différer du pneu suivant à hauteur d'au moins 3% en termes de diamètre de montage ;
- de transférer ledit pneu cru audit moule de vulcanisation respectif (3a) ;
- de mouler et de vulcaniser ledit pneu cru.

5. Processus selon la revendication 4, dans lequel la conformation circulaire desdits talons (106) est régularisée au moyen d'un dispositif de pré-moulage (10) adapté pour venir en butée contre des talons de pneu cru ayant un diamètre compris entre un diamètre minimal et un diamètre maximal supérieur audit diamètre minimal d'au moins 3%, sur toute l'étendue annulaire radialement intérieure desdits talons.

6. Processus selon la revendication 5, dans lequel ledit diamètre maximal est supérieur audit diamètre minimal par une fraction comprise entre 20% et 40%.

7. Processus selon l'une quelconque des revendications 4 à 6, dans lequel ledit pneu cru est déchargé de ladite ligne de construction (2) au moyen dudit dispositif de pré-moulage.

8. Processus selon l'une quelconque des revendications 4 à 7, dans lequel ledit dispositif de pré-moulage (10) vient en butée contre lesdits talons (106) sur toute leur étendue annulaire radialement intérieure à une pression supérieure ou égale à 5 bars.

9. Processus selon l'une quelconque des revendications 4 à 8, dans lequel ledit dispositif de pré-moulage (10) vient en butée contre lesdits talons (106) sur toute leur étendue annulaire radialement intérieure pendant une durée supérieure ou égale à 30 secondes.

10. Processus selon l'une quelconque des revendications 4 à 9, dans lequel ledit dispositif de pré-moulage vient en butée contre lesdits talons sur toute leur étendue annulaire radialement intérieure pendant une durée inférieure à une durée de cycle prédéfinie de ladite ligne de construction (2).

11. Processus selon l'une quelconque des revendications 4 à 10, dans lequel ledit pneu cru (100) est transféré dudit dispositif de pré-moulage (10) à un entrepôt de stockage temporaire (6) avant d'être vulcanisé.

12. Usine de production de pneu comprenant une ligne de construction de pneu cru (2) et un dispositif de pré-moulage (10) adapté pour commander la géométrie dudit pneu cru construit, ledit dispositif de pré-moulage étant situé en aval de ladite ligne de construction (2) et en amont d'une unité de moulage et de vulcanisation (3) pour ledit pneu cru, où ledit dispositif de pré-moulage comprend un corps central (11) et une pluralité de secteurs profilés (12) agencés de manière successive côte à côte pour former une surface extérieure sensiblement cylindrique (13) dudit dispositif et couplés audit corps central avec possibilité de déploiement dans une direction radiale (Y) définie dans ledit dispositif de manière à faire varier le diamètre de ladite surface extérieure (13) entre une configuration contractée avec un diamètre minimal et une configuration déployée avec un diamètre maximal, supérieur audit diamètre minimal d'au moins 3%, où lesdits secteurs profilés (12) sont capables de venir en butée contre ledit pneu cru sur toute l'étendue annulaire radialement intérieure de ses talons respectifs, où chacun desdits secteurs profilés chevauche au moins partiellement dans ladite direction radiale au moins un secteur profilé adjacent à celui-ci.

13. Usine selon la revendication 12, dans laquelle ledit dispositif de pré-moulage (27) est positionné au niveau d'une station de travail finale (4a) de ladite ligne de construction (2) et est agencé pour le déchargement dudit pneu cru de ladite ligne de construction.

14. Usine selon la revendication 12 ou 13, dans laquelle chacun desdits secteurs profilés (12) chevauche au moins partiellement au moins un secteur profilé adjacent au niveau d'une rondelle profilée respective (16) agencée de manière circonférentielle autour d'un axe central (X) dudit dispositif de pré-moulage, ladite rondelle profilée (16) étant soutenue par au moins un support (15), s'étendant dans une direction sensiblement circonférentielle et faisant face audit corps central (11).

15. Usine selon l'une des revendications 12 à 14, dans laquelle ledit diamètre minimal de ladite surface extérieure (13), dans ladite configuration contractée, est compris entre 380 et 420 mm et ledit diamètre maximal de ladite surface extérieure (13), dans ladite configuration déployée, est compris entre 600 et 650 mm.
